(19) Europäisches Patentamt / European Patent Office / Office européen des brevets

(11) **EP 2 564 049 B1**

(12) **EUROPÄISCHE PATENTSCHRIFT**

(45) Veröffentlichungstag und Bekanntmachung des Hinweises auf die Patenterteilung:
**26.02.2020 Patentblatt 2020/09**

(21) Anmeldenummer: **11712553.4**

(22) Anmeldetag: **06.04.2011**

(51) Int Cl.:
**F02D 41/14** (2006.01)     **G06N 7/00** (2006.01)

(86) Internationale Anmeldenummer:
**PCT/EP2011/055312**

(87) Internationale Veröffentlichungsnummer:
**WO 2011/134764 (03.11.2011 Gazette 2011/44)**

(54) **STEUERGERÄT UND VERFAHREN ZUR BERECHNUNG EINER AUSGANGSGRÖßE FÜR EINE STEUERUNG**

CONTROL DEVICE AND METHOD FOR CALCULATING AN OUTPUT PARAMETER FOR A CONTROLLER

UNITÉ DE COMMANDE ET PROCÉDÉ DE CALCUL D'UNE GRANDEUR DE SORTIE POUR UNE COMMANDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.04.2010 DE 102010028266**

(43) Veröffentlichungstag der Anmeldung:
**06.03.2013 Patentblatt 2013/10**

(73) Patentinhaber: **Robert Bosch GmbH**
**70442 Stuttgart (DE)**

(72) Erfinder:
- **STREICHERT, Felix**
  **70173 Stuttgart (DE)**
- **LANG, Tobias**
  **71737 Kirchberg (DE)**
- **MARKERT, Heiner**
  **70178 Stuttgart (DE)**
- **AUE, Axel**
  **70825 Korntal-Muenchingen (DE)**
- **KRUSE, Thomas**
  **70190 Stuttgart (DE)**
- **IMHOF, Volker**
  **70806 Kornwestheim (DE)**
- **RICHARDSEN, Thomas**
  **70839 Gerlingen (DE)**
- **SAETZLER, Michael**
  **70197 Stuttgart (DE)**
- **SCHULMEISTER, Ulrich**
  **74321 Bietigheim-Bissingen (DE)**
- **BANNOW, Nico**
  **70374 Stuttgart (DE)**
- **ULMER, Holger**
  **89077 Ulm (DE)**
- **DIENER, Rene**
  **71634 Ludwigsburg (DE)**
- **KLOPPENBURG, Ernst**
  **71254 Ditzingen (DE)**

(56) Entgegenhaltungen:
DE-A1-102008 001 081     DE-A1-102008 043 315
DE-T5-112005 003 527

- KOCIJAN J ET AL: "Gaussian process model based predictive control", AMERICAN CONTROL CONFERENCE, 2004. PROCEEDINGS OF THE 2004 BOSTON, MA, USA JUNE 30-JULY 2, 2004, PISCATAWAY, NJ, USA, IEEE, Bd. 3, 30. Juni 2004 (2004-06-30), Seiten 2214-2219, XP010761150, ISBN: 978-0-7803-8335-7
- Carl Wilhelmsson: "Field Programmable Gate Arrays and Reconfigurable Computing in Automatic Control", , 1 January 2007 (2007-01-01), XP055422347, Lund, SE Retrieved from the Internet: URL:https://lup.lub.lu.se/search/ws/files/5347836/1033479.pdf [retrieved on 2017-11-07]

## Beschreibung

Die Erfindung geht aus von einem Steuergerät in einem Fahrzeug sowie von einem Verfahren zur Berechnung einer Ausgangsgröße für eine Steuerung von Funktionen des Fahrzeugs.

Für die Bestimmung von Größen in Fahrzeugsteuergeräten, die nicht oder nur sehr aufwändig (und damit zu teuer für eine Realisierung in Serienfahrzeugen) gemessen werden können, z.B. kritischer Größen des Verbrennungsprozesses in einem Motorsteuergerät wie Abgastemperatur, Füllungsstand, Rohemissionswerte, Wirkungsgrade, Verbrauch, etc., welche aber von dem Steuergerät zur Ausführung seiner Steuerfunktionen benötigt werden, werden verschiedene Methoden verwendet.

Eine weit verbreitete Methode ist die der Kennlinien, welche einen eindimensionalen Zusammenhang darstellen können, oder die der Kennfelder, welche einen zwei- oder mehrdimensionalen Zusammenhang darstellen können. Diese Kennfelder lassen sich über Stützstellen definieren/speichern und die Vorhersage der Zielgröße für bestimmte Eingabewerte lässt sich aus den benachbarten Stützstellen interpolieren, z.B. linear oder durch Splines, siehe beispielsweise die DE 199 63 213 A1. Andere Methoden gehen von in der Regel stark vereinfachten physikalischen Modellen aus, siehe z.B. DE 10 2008 004 362 A1, welche oft auch durch Kennfelder dargestellt werden. Überlegt werden auch datenbasierte parametrische Regressionsmodelle wie zum Beispiel Neuronale Netze, z.B. DE 10 2007 008 514. Aus der DE 10 2008 001 081 A1 ist bekannt, bei einer weiterhin kennfeldbasierten Steuerung die somit ermittelten Größen mit einem datenbasierten Ansatz zu überprüfen bzw. zu modifizieren. Verfahren für die Schätzung von Verbrennungsparametern bzw. zur Steuerung eines Brennkraftmaschine sind auch der DE 11 2005 003 527 T5 und der DE 10 2008 043 315 A1 zu entnehmen.

Im Automotive-Bereich werden sogenannte Bayes'sche Regressionen nicht "online", das heißt während des regulären Betrieb des Fahrzeugs, sondern "offline", also zum Beispiel in einer Kalibrierungsphase eines Motors, eingesetzt, siehe zum Beispiel: "Bayesian statistics in engine mapping", Ward, M. C., Brace, C. J., Vaughan, N. D., Shaddick, G., Ceen, R., Hale, T., Kennedy, G. in:International Conference on Statistics and Analytical Methods in Automotive Engineering, IMechE Conference Transactions, pp. 3-15, 2002 sowie "Validation of Neural Networks in Automotive Engine Calibration", D. Lowe und K. Zapart, Proceedings Conference on Artificial Neural Networks, 1997".

Wenn Kennfelder zur Charakterisierung der Zusammenhänge verwendet werden, hat man oft einen hohen Applikationsaufwand oder eine geringe Prognosegenauigkeit bei mehr-dimensionalen Zusammenhängen. Bei der Erstellung eines zuverlässigen physikalischen Modells entsteht ein hoher Entwicklungsaufwand und nicht immer ist die Entwicklung eines nicht zu stark vereinfachten physikalischen Modells möglich, insbesondere bei den komplexen Abläufen des Verbrennungsprozesses, welche neben der Thermodynamik z.B. auch Chemie und Strömungsmechanik beinhalten müsste. Für die bekannten Verfahren gilt, dass sie keine Aussagen über die erwartete Genauigkeit machen. Insbesondere bei kritischen Zielgrößen kann dies jedoch wichtig sein, um eine zuverlässige Steuerung oder Regelungsstrategie zu gewährleisten.

Vorteile der Erfindung

Bayes'sche Regressionen sollen eingesetzt werden für die Bestimmung von Größen in Fahrzeugsteuergeräten, die nicht oder nur sehr aufwändig (und damit zu teuer für eine Realisierung in Serienfahrzeugen) gemessen werden können, z.B. kritischer Größen des Verbrennungsprozesses in einem Motorsteuergerät wie Abgastemperatur, Füllungsstand, Rohemissionswerte, Wirkungsgrade, Verbrauch, etc., welche aber von dem Steuergerät insbesondere zur Ausführung seiner Steuerfunktionen benötigt werden. Die hier vorgeschlagene Methode unter Verwendung der nicht-parametrischen, datenbasierten Bayes'schen Regression ist echtzeitfähig und liefert - insbesondere bei mehrdimensionalen und/oder besonders komplexen Problemstellungen - zuverlässigere Vorhersagen als die bekannten Verfahren wie zum Beispiel die Kennfeld-Interpolation oder vereinfachte physikalische Modelle und können darüber hinaus auch speichereffizienter durchgeführt werden. Des Weiteren ist das benötigte Vorwissen bzw. damit einhergehend der benötigte Aufwand im Vorfeld, um den Ein-/Ausgangszusammenhang mit Kennfeldern und/oder physikalischem Modell korrekt festzulegen oder um Algorithmenparameter bei parametrischen, datenbasierten Regressionsverfahren wie Neuronalen Netzen festzulegen, z.B. die Anzahl benötigter Neuronen, deutlich niedriger mit dem vorgeschlagenen Verfahren nach Anspruch 7 bzw. Steuergerät nach Anspruch 1.

Weitere Vorteile ergeben sich aus den Merkmalen der abhängigen Ansprüche sowie aus der Beschreibung der Ausführungsbeispiele.

Besonders vorteilhaft ist die Realisierung der Bayes'sche Regression als Gaußprozesse, insbesondere Sparse Gaussian Prozesse, durch welche eine besonders speicher- und recheneffiziente Berechnung ermöglicht werden kann.

Für die Steuerung bzw. Regelung auf Basis von mit Bayes'scher Regression bestimmten Ausgangsgrößen ist es besonders zweckmäßig neben der Ausgangsgröße auch die aus der Bayes'schen Regression ermittelbare Varianz der Ausgangsgröße zu berücksichtigen. Damit kann eine sicherere und genauere Steuerung und Regelung erreicht werden. Insbesondere kann bei einer hohen Varianz, welche beispielsweise einen bestimmten Schwellwert überschreitet, also bei einer möglichen hohen Ungenauigkeit der Ausgangsgröße, eine defensive Steuerungs- oder Regelungsstrategie gewählt werden, es kann ein Fehlersignal ausgegeben werden oder es können andere geeignete Maßnahmen ergriffen werden.

Bestimmte Regelungs- und Steuerungsaufgaben sind besonders vorteilhaft durchzuführen, wenn neben den aktuellen Eingangsgrößen auch ältere Eingangsgrößen und / oder ältere Ausgangsgrößen in die Regression einbezogen werden zur Bestimmung der aktuellen Ausgangsgröße. Damit können auch komplexere dynamische, also nicht quasi-stationäre Prozesse abgebildet werden und solche mit höherer Genauigkeit geregelt oder gesteuert werden. In diesem Fall spricht man von einer dynamischen Modellierung durch Autoregression.

Um die Rechenkapazität und Auslastung einer Recheneinheit des Steuergeräts nicht übermäßig zu belasten, werden einzelne Teilaufgaben der Regressionsberechnung auf darauf spezialisierte Hardwareeinheiten ausgelagert. Diese Hardwareeinheiten sind aufgrund ihrer Spezialisierung in der Lage, diese Aufgaben schneller und effizienter durchzuführen als die flexibleren Recheneinheiten. Für die durchzuführenden Bayes'schen Regressionen ist es dabei vorgesehen, dass durch im Steuergerät gewöhnlich eingesetzte Recheneinheiten wie Mikrocontroller nur aufwändig berechenbare Exponentialfunktionberechnungen zumindest teilweise von der Recheneinheit auf die Hardwareeinheit, insbesondere auf eine Logikschaltung ausgelagert werden.

Zeichnungen

Ausführungsbeispiele der Erfindung sind in den Zeichnungen dargestellt und in der nachfolgenden Beschreibung näher erläutert. Es zeigen

Figur 1     schematisch eine Steuergerät sowie steuergerätexterne Einheiten
Figur 2a    schematisch eine nicht-dynamische Modellierung
Figur 2b    schematisch eine dynamische Modellierung
Figur 3a    schematisch eine Regelung / Steuerung unter Verwendung einer Ausgangsgröße
Figur 3b    schematische eine Regelung / Steuerung unter Verwendung einer Ausgangsgröße und deren Varianz
Figur 4     schematisch Komponenten eines Mikrocontrollers eines Steuergeräts und deren Verbindung
Figur 5     ein Verfahren zur Bestimmung von Ausgangsgrößen auf Basis von Eingangsgrößen und Trainingsgröße mittels Bayes'scher Regression

Beschreibung der Ausführungsbeispiele

In den letzten Jahren wurden sogenannte nicht-parameterische Regressionsverfahren entwickelt bzw. weiterentwickelt, insbesondere Kernelbasierte Verfahren wie Support Vector Maschinen [Support-Vector Networks, C. Cortes and V. Vapnik, Machine Learning, 20, 1995] und als weitere Unterklasse die sogenannten Bayes'schen Regressionsverfahren wie zum Beispiel Kriging [A statistical approach to some mine valuations and allied problems at the Witwatersrand, D.G. Krige, 1951; The intrinsic random functions, and their applications, G. Matheron, Adv. Appl. Prob., 5, pp 439-468, 1973], Gaussian Processes [Evaluation of Gaussian Processes and other Methods for Non-linear Regression, C. E. Rasmussen, 1996], Sparse Gaussian Processes [Sparse Gaussian processes using pseudo-inputs. E. Snelson and Z Ghahramani, Advances in Neural Information Processing Systems 18, pp 1259-1266, 2006] und andere.

Parametrische Modelle benötigen ein A-priori-Postulat der Beziehung zwischen den Eingangsgrößen und den zu modellierenden Ausgangsgrößen. Unter diese Verfahren fallen zum Beispiel die physikalische Modellierung, die lineare oder polynomielle Regression oder auch neuronale Netze. Ziel ist es dabei auf Basis des Postulats optimale Parameter zu bestimmen, damit das postulierte Modell der zu modellierenden Funktion möglichst nahe kommt. Mit einem falschen oder ungenügenden Postulat fällt damit auch die Modellierung. Dagegen benötigt eine nicht-parametrische Modellierung wie die Bayes'schen Regressionsverfahren kein solches Postulat. Anstelle der Beschränkung des Modells auf ein spezifisches Postulat können auch alle/sehr viele Hypothesen berücksichtigt werden.

Die Bayes'sche Regression ist ein datenbasiertes Verfahren, das heißt zum Erstellen eines Modells sind Trainingspunkte sowie zugehörige Ausgangswerte nötig. Aus diesen werden dann Modelle erstellt, was im Wesentlichen darauf hinausläuft die Trainingsdaten zu speichern und abstrakte 'Hyperparameter' zu bestimmen, welche den Raum der zufälligen Funktionen parametrisieren und die effektiv den Einfluss der einzelnen Trainingspunkte auf die spätere Modellvorhersage gewichten. Die im Folgenden betrachtete Kernelfunktion K, die der Generierung der Zufallsfunktion, dem Gaußschen Prozess, zugrunde liegt, ist die sogenannte quadratisch-exponentielle Funktion.

Die Grundlagen zu Bayes'scher Regression finden sich in "Gaussian Processes for Machine Learning", C. E. Rasmusen and C. Williams, MIT Press, 2006. Die grundlegende Formel zur Berechnung der Vorhersage v am Punkt u ist gegeben durch:

$$v = \sum_{i=1}^{N} (Q_y)_i \sigma_f \exp\left(-\tfrac{1}{2} \sum_{d=1}^{D} \frac{((x_i)_d - u_d)^2}{l_d}\right)$$

Dabei bezeichnen v die Vorhersage der Ausgangsgröße, x Trainingsdaten, u den Testpunkt (Eingangsgröße), $\sigma$ und I sind beispielhafte Hyperparameter und Q einen Vektor aus dem Modelltraining. Die Summationen laufen über D Dimensionen der Eingangs- bzw. Trainingsdaten sowie über N Trainingsdaten. Die Eingangsgröße u kann normiert in die Berechnung eingehen.

Die Formel zur Berechnung der Modellvarianz $\sigma\_v$ für die Ausgangsgröße ist gegeben mit:

$$(k_u)_i = \sigma_f \exp\left(-\tfrac{1}{2} \sum_{d=1}^{D} \frac{((x_i)_d - u_d)^2}{l_d}\right)$$

$$\sigma_v = \sigma_f - \sum_{i=1}^{N} \sum_{j=1}^{N} (k_u)_i Q_{ij} (k_u)_j - \sigma_n^2$$

Mögliche Implementierungen der Bayes'schen Regression ergeben sich im Fall von Kriging über eine Reduzierung der sogenannten Hyperparameter. Andere Bayes'sche Regressionsverfahren könnten alternativ auch zusätzliche Hyperparameter einführen oder mit anderen Kernelfunktionen arbeiten, welche auch ohne Exponentialfunktionen auskommen könnten. Im Fall des Sparse GP werden virtuelle Trainingspunkte ($x_i$) eingeführt, die problemspezifisch über den Eingangsraum verteilt werden können und so die Anzahl N der benötigen Trainingspunkte reduzieren können. Alternative Ansätze wie KD-Trees benutzen Grenzwerte für die inneren Abstände (innere Summe über D) und effiziente Speicherstrukturen, um den Einfluss von Gruppen von Trainingspunkten geringerer Relevanz summarisch abschätzen zu können. Dadurch wird die Anzahl der Terme (äußere Summe über N), die zu berechnen sind, weiter reduziert.

Insbesondere kann man die obengenannte Formel reduzieren auf eine einfachere Form:

$$\hat{v} = \sum_{i=1}^{N} (Q_{yA})_i \exp\left(\sum_{d=1}^{D} (\hat{x}_i)_d \hat{u}_d - \sum_{d=1}^{D} \hat{u}_d^2\right)$$

Besonders geeignet ist der Sparse-Gauß-Prozess, da auf diese Art größere Datenmengen bearbeitet werden können und die Vorhersagegeschwindigkeit steigt, da die Anzahl der virtuellen Trainingspunkte typischerweise geringer ist als die Anzahl der ursprünglich Daten.

Es existieren für die Algorithmen zahlreiche Erweiterungsmöglichkeiten, die den Einsatz der Methoden mit großen Datenmengen z.B. so ermöglichen, dass je nach Genauigkeitsanforderung der Rechnung entweder ein schnelles, dafür weniger genaues Ergebnis zurückgeliefert werden kann oder auch ein genaueres Ergebnis, das dafür aber aufwändiger zu berechnen ist - es ist also möglich, die Genauigkeit der Modellvorhersage der verfügbaren Rechenzeit anzupassen.

[Sparse Gaussian processes using pseudo-inputs. E. Snelson and Z. Ghahramani, Advances in Neural Information Processing Systems 18, pp 1259-1266, 2006] [Fast gaussian process regression using kd-trees, Y. Shen, A. Ng, and M. Seeger, in Advances in Neural Information Processing Systems 18, pages 1227-1234, 2006]

Die Bayes'schen Regressionsverfahren wie zum Beispiel Kriging, Gaussian Processes, Sparse Gaussian Processes etc.. sollen nun auf dem Steuergerät eines Fahrzeugs für die Vorhersage von motorrelevanten Kenngrößen (z.B. verbrennungstechnische Größen, Luftsystemgrößen, etc.) zur Steuerung und / oder Regelung eingesetzt werden.

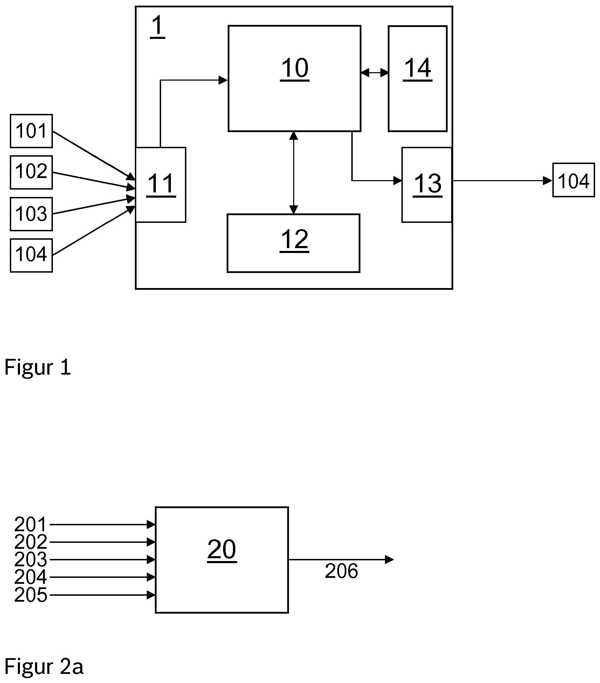

In Figur 1 ist schematisch ein Steuergerät in einem Fahrzeug gezeigt. Das Steuergerät 1 verfügt dabei über eine Recheneinheit 10, einen Speicher 12, einen Eingang 11, einen Ausgang 13 und eine Logikschaltung 14. Über den Eingang 11 empfängt das Steuergerät Signale von Steuergerät-extern, zum Beispiel von Sensoren oder anderen Steuergeräten, Recheneinheiten oder sonstigen Modulen 101-104. Diese Größen werden hier und im folgenden Eingangsgrößen genannt und können beispielsweise Temperatursignale, Drehzahlsignale, Mengensignale etc. darstellen. In der Speichereinheit 12 sind Werte gespeichert, die für bestimmte Größen offline, also vor dem Betrieb des Steuergeräts 1 bzw. des Fahrzeugs in Testmessungen bestimmt wurden und in der Speichereinheit 12 gespeichert wurden. Diese Werte werden hier und im folgenden als Trainingswerte bezeichnet. Mit den Begriffen "offline" oder "vor dem Betrieb" wird eine Phase bestimmt, in welcher das Steuergerät 1 nicht im Normalbetrieb des Fahrzeugs zu Echtzeitregelungs und -steuerungsaufgaben eingesetzt wird ("online", "im Betrieb"), sondern in welchem für das Steuergerät relevante Fahrzeugfunktionen getestet, kalibriert und bestimmt werden, zum Beispiel in einer Applikation des Steuergeräts im Werk eines Automobilzulieferers oder Automobilherstellers, in einer Werkstatt oder in einem Testbetrieb.

In dem Speicher 12 können auch Parameter und Größen abgelegt sein, die von dem Steuergerät 1 empfangen oder berechnet wurden und ebenfalls zu den Eingangsgrößen zählen. Die Recheneinheit 10 arbeitet ein Softwareprogramm ab zur Bestimmung einer oder mehrerer Ausgangsgrößen zur Erfüllung der Steuer- bzw. Regelfunktionen des Steuergeräts 1. Ausgangsgrößen bezeichnen dabei zur Steuerung / Regelung benötigte Größen, welche nicht oder nur sehr aufwändig direkt im Fahrzeug gemessen oder bestimmt werden können und daher aus den zur Verfügung stehenden Eingangsgrößen bestimmt werden. Dazu führt das Steuergerät im Betrieb eine Bayes'sche Regression über die im Speicher 12 gespeicherten, für die zu bestimmende Ausgangsgröße relevanten, Trainingsdaten durch unter Berücksichtigung der für die zu bestimmende Ausgangsgröße relevanten Eingangsgrößen. Dazu könnte die Recheneinheit 10 die nötigen Algorithmen zur Durchführung der Regression in Software abarbeiten, erfindungsgemäß werden aber auch Rechenschritte auf spezialisierte Hardwareeinheiten wie die in Figur 1 gezeigte, mit der Recheneinheit verbundene Logikschaltung 14 ausgelagert. Die bestimmte Ausgangsgröße oder ein damit bestimmtes Steuer- oder Regelungssignal wird über den Ausgang 13 ausgegeben, z.B. an den Aktor 104.

Die hier vorgestellten Methoden eignen sich sehr gut zum Einsatz in der dynamischen Modellierung mit autoregressiven Ansätzen. Dies erweitert die Anwendungsmöglichkeiten auf Gebiete, in denen es z.B. bei dynamischen Lastwechseln auf das Einschwingverhalten der modellierten Größe ankommt (siehe, Detaillierte Beschreibung'). [Multiple-step ahead prediction for non linear dynamic systems - A Gaussian Process treatment with propagation of the uncertainty, A. Girard, C.E. Rasmussen, and R. Murray-Smith, in Advances in Neural Information Processing Systems 15, Cambridge, 2003][Comprising Prior Knowledge in Dynamic Gaussian Process Models, K. Azman and J. Kocijan, International Conference on Computer Systems and technologies - CompSysTech 2005][Gaussian process approach for modelling of nonlinear systems, G. Gregorcic, G. Lightbody, in Engineering Applications of Artification Intelligence 22, pages 522-533, 2009].

Die dynamische Modellierung ist eine relativ direkte Erweiterung zu dem vorgeschlagenen Verfahren. Während bei der klassischen quasistationären Modellierung lediglich die aktuellen Eingangswerte zum Zeitpunkt t als Eingänge verwendet werden dürfen, lässt man zu einer dynamischen Modellierung zum Einen Eingangswerte aus der Vergangenheit zu, z.B. Xi(t-1),..., Xi(t-m), um langsam wirkende Eingangsgrößen zu erfassen, und zum Anderen die letzten Ausgangswerte, d.h. y(t-1),...,y(t-m), um träge Systeme mit Speichereffekten zu modellieren. Zum Beispiel können damit Größen mit Memoryeffekt wie die Abgastemperatur, welche auch abhängig ist von vergangenen Motorgrößen, oder Größen wie der Ladedruck, der von der sich nur langsam ändernden Turboladereinstellung abhängt, besser abgebildet werden.

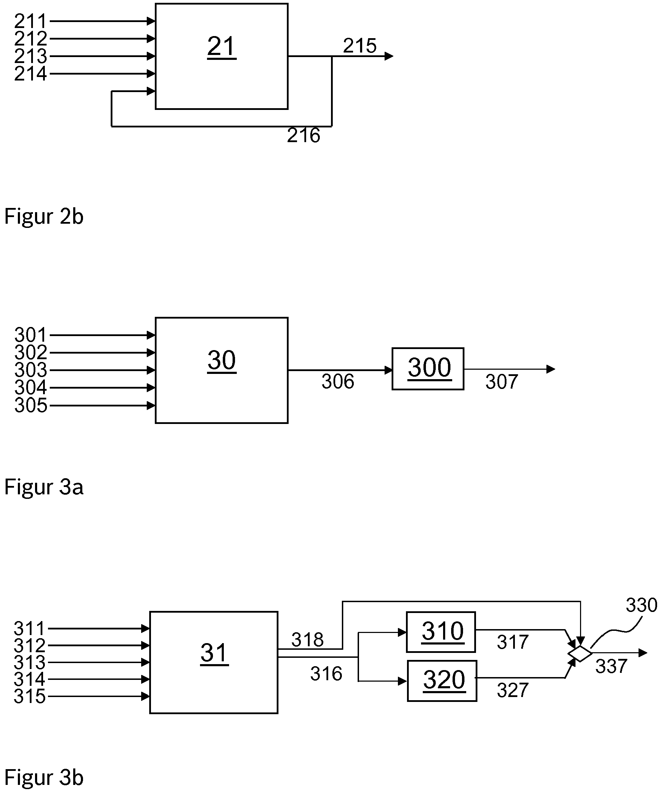

Figur 2a zeigt ein nicht-dynamisches Verfahren, bei welchem aktuelle Eingangsgrößen 201-205 in eine Bayes'sche Regression 20 einbezogen werden, um eine Ausgangsgröße 206 zu ermitteln. Dagegen ist in Figur 2b eine dynamische Modellierung gezeigt. Dort werden aktuelle Eingangsgrößen 211 und 212, Eingangsgrößen aus der Vergangenheit 213 und 214 sowie die Ausgangsgröße aus der Vergangenheit 216 in die Bayes'sche Regression 21 einbezogen, um die aktuelle Ausgangsgröße 215 zu ermitteln.

Die Bayes'schen Regressionsverfahren zeichnen sich wie erwähnt dadurch aus, dass sie sogenannte Black-Box Verfahren sind, d.h. diese Regressionsverfahren haben bei der Modellerstellung keine anderen Eingangsparameter als die offline gemessenen Trainingsdaten. Sie können ohne weiteres Vorwissen und ohne Parametrierung des Modellierungsalgorithmus durch einen Applikationsingenieur problemlos hoch-dimensionale nicht-lineare Zusammenhänge abbilden, lediglich basierend auf den gemessenen Trainingsdaten. Im Gegensatz zu allen anderen Verfahren können die Bayes'schen Regressionsmodelle darüber hinaus zusätzlich zur Modellvorhersage noch eine Aussage zur Modellvarianz (Modellunsicherheit) am jeweils abgefragten Punkt liefern. Das ermöglicht es, unvorhergesehene Systemzustände zu detektieren und entsprechend darauf zu reagieren. Dieser Fall kann z.B. eintreten, wenn bei der Aufnahme der Mess-/Trainingspunkte das System nicht vollständig angeregt wurde, z.B. es wurden bei einem Motor für die Referenzmessungen nur niedrige Drehzahlen gefahren. Der Kennfeld-Ansatz würde gegebenenfalls die Vorhersage konstant fortsetzen, und eventuell ebenso ein physikalischer Ansatz, wenn Eingangsabhängigkeiten auf Kennlinien oder Kennfelder reduziert wurden.

Die zusätzliche Modellvarianz erlaubt es uns, auf dem Steuergerät festzustellen, ob das Modell geeignet ist, im aktuellen Systemzustand zuverlässige Vorhersagen zu machen, wie im obigen Beispiel, wenn in der Trainingsphase für ein Motormodell nur Mess-/Trainingspunkte für niedrige Drehzahlen aufgezeichnet wurden, aber der Fahrer in hohen Drehzahlbereichen fährt. Mit der Modellvarianz der Bayes'schen Regression ist z.B. feststellbar, dass das Modell in diesem Fall nicht zuverlässig ist und man könnte von einem konventionellen Steuer-/Regelungsansatz auf einen defensiven Steuer-/Regelungsansatz für Ausnahmesituationen umschalten, damit der Motor nicht wegen falscher Modellausgaben beschädigt werden kann (fail-save-Modus). Auch weitere Maßnahmen wie Fehlersignalausgabe sind denkbar.

Figur 3a zeigt schematisch Eingangsgrößen 301-305, welche in eine Bayes'sche Regression 30 einbezogen werden zur Ermittlung der Ausgangsgröße 306, aus welcher durch eine Steuerungs- / Regelungsfunktion 300 ein Steuer- / Regelsignal 307 bestimmt wird. In Figur 3b werden entsprechende Eingangsgrößen 311-315 in eine Bayes'sche Regression 31 einbezogen. Zusätzlich zur Ausgangsgröße 316 wird die Varianz 318 der Ausgangsgröße 316 im weiteren Steuerungs- / Regelungsverlauf berücksichtigt. Varianz ist dabei nicht im streng mathematischen Sinn zu verstehen, sondern bezeichnet vielmehr die durch die Regression abgeschätzte Unsicherheit, mit welcher die Bestimmung der Ausgangsgröße behaftet ist. Hierzu wird auf Basis der Ausgangsgröße 316 eine defensive Steuerungs- / Regelungsfunktion 310 und eine konventionelle Steuerungs- / Regelungsfunktion 320 eingesetzt, welche ein defensives Steuer- / Regelsignal 317 bzw. ein konventionelles Steuer- / Regelsignal 327 bestimmen. In Abhängigkeit der Varianz 318 wird durch die Entscheidungsfunktion 330 entschieden, welche der beiden Steuer- / Regelsignale 317 und 327 als Steuer-/ Regelsignal 337 ausgegeben werden soll. Dabei wird bei einer hohen Varianz 318, insbesondere bei einer Varianz 318, welche eine bestimmte Schwelle überschreitet, das defensive Steuer- / Regelsignal 317 gewählt, ansonsten das konventionelle Steuer- / Regelsignal 327.

Die vorgeschlagenen Bayes'schen Regressionsmethoden werden im Steuergerät teilweise in spezieller Hardware in Echtzeit gerechnet. Sie sind hervorragend parallelisierbar, so dass effiziente Implementierungen in dedizierter Hardware möglich sind.

Der zugehörige Algorithmus in C-Code bei einer Software-Implementierung? welche nicht erfindungsgemäß ist, könnte dann beispielsweise lauten:

```
float amu_asc_predict_single(
    float *p1,      /* m_x    (Dim. D) */
    float *p2,      /* f_x    (Dim. D) */
    float *p3,      /* Qya    (Dim. N) */
    float p4,       /* f_y    (Dim. 1) */
    float p5,       /* m_y    (Dim. 1) */
    unsigned int p6, /* N      (Dim. 1): Anzahl der
                        Trainingspunkte/Durchläufe der
                        äußeren Schleife. */
    unsigned int p7, /* D      (Dim. 1) */
    unsigned int p8, /* NStart (Dim. 1): Startwert der äußeren
                        Schleife. Erster Index = 0 */
    float p9,       /* vInit (Dim. 1): Normalerweise 0,
                        außer bei Fortsetzung:
                        Dann Zwischensumme der vorhergehenden Schleifeniterationen
    */
    float *V,       /* hatX   (Dim N*D): Umskalierte
                        Trainingspunkte */
    float *u        /* Testpunkt tilde u (Dim. D) */
    )
{
    float v = p9;
    float C = 0.0;
    float t;
    unsigned int k,j,i;

    for (k=0; k < p7; k++)
    {
        u[k] = (u[k] - p1[k]) * p2[k];
        C += u[k] * u[k];
    }

    for (j=p8; j < p6; j++)
    {
        t = -C;
```

7

```
i = j * p7;

for (k=0; k < p7; k++)
    t += V[i+k] * u[k];

v += p3[j] * exp(t);
}

return v*p4 + p5;
}
```

Diese reduzierte Form gilt für Kriging, Gauß-Prozesse und Sparse-Gauß-Prozesse. Wie sich aus dem C-Code ergibt, lässt sich die Auswertung des Modells parallelisieren, indem insbesondere aber nicht ausschließlich die Schleife über j (in der Formel die äußere Summe über N) über mehrere Rechenwerke verteilt wird (z.B. CPU1 Summe p8 bis t; CPU2 Summe t+1 bis p6) und dann in einem separaten Schritt die Teilergebnisse wieder zusammen geführt werden (z.B. v1=CPU1, v2=CPU2; v = (v1 + v2)-k*p5; mit k Anzahl CPUs-1 (im Beispiel k=1)).

Erfindungsgemäß werden die nötigen Algorithmen teilweise in spezialisierter Hardware implementiert. Dabei kann z.B. eine Hardwareeinheit, insbesondere eine Logikschaltung, welche einer Recheneinheit des Steuergeräts zugeordnet ist, optimiert sein auf die Berechnung bestimmter zur Durchführung der Bayes'schen Regression nötigen Rechenschritte. Besonders vorteilhaft ist dabei eine auf die Logikschaltung ausgelagerte Durchführung von Exponentialfunktionberechnungen.

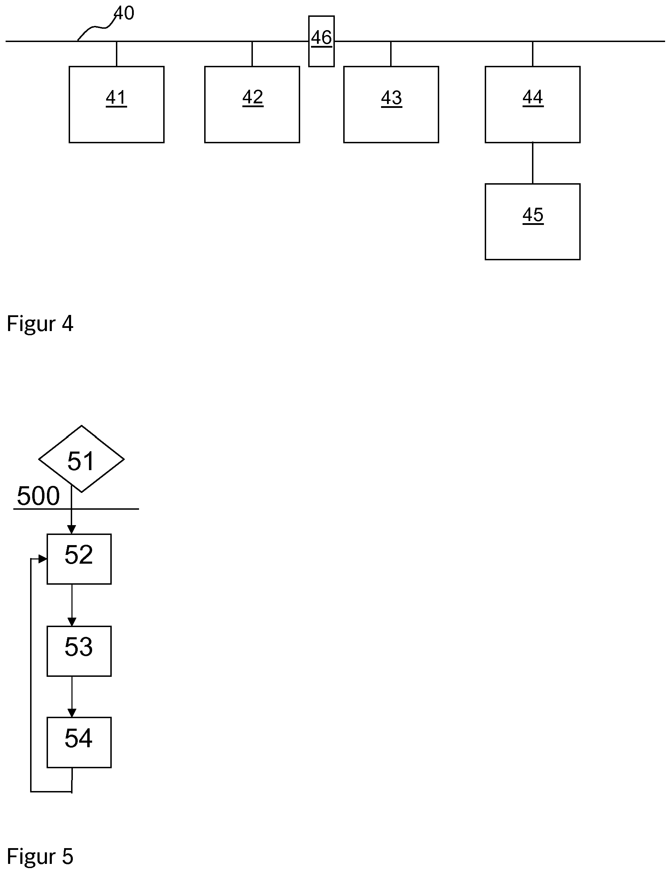

Figur 4 zeigt zu diesem Zweck schematisch Komponenten eines Mikrocontrollers eines Steuergeräts und deren Verbindung. Dabei sind eine Recheneinheit bzw. ein Prozessorkern 41 einer Recheneinheit, eine erste globale Speichereinheit 42, eine zweite globale Speichereinheit 43 und eine Logikschaltung 44 jeweils mit der Kommunikationsverbindung 40 verbunden und können über diese jeweils miteinander kommunizieren. Die Kommunikationsverbindung 40 kann zum Beispiel als Bussystem vorgesehen sein. Figur 4 unterteilt beispielsweise mit einer Busbrücke 46 die Kommunikationsverbindung 40 in zwei getrennte Busse. Die Logikschaltung 44 kann mit einer lokalen Speichereinheit 45 verbunden sein.

Die globalen Speichereinheiten 42 und 43 können zum Beispiel als RAM- oder FLASH-Speicher ausgestaltet sein. Das Vorsehen von zwei globalen Speichern in Figur 4 ist dabei eine optionale Ausgestaltung. Der lokale Speicher 45 kann beispielsweise als RAM-Speicher oder als Register vorgesehen sein und ist vorzugsweise im globalen Adressbereich sichtbar. Die in Figur 4 gezeigte Busbrücke 46 ist optional. Wie in der folgenden Beschreibung näher ausgeführt, kann in einer besonderen Ausführung der Erfindung auch auf den lokalen Speicher 45 verzichtet werden. Die in Figur 4 gezeigten Komponenten des Mikrocontrollers sind nicht als abschließend zu verstehen, insbesondere können auch weitere Prozessorkerne vorgesehen sein.

Die Schaltungsanordnung 44 ist dabei ausgestaltet, eine Exponentialfunktion bzw., da konfigurierbar, verschiedene Exponentialfunktionen und gegebenenfalls die Summe aus Exponentialfunktionen zu berechnen. Sie stellt einen Zustandsautomat dar, der aus einem Eingangsspeicher Eingangsdaten zur Berechnung holt, im Laufe der Berechnung eine Exponentialfunktion berechnet, gegebenenfalls durch eine Ablaufsteuerung in Kommunikation mit der Recheneinheit, bzw. mit dem Prozessorkern 41 des Mikrocontrollers in den erforderlichen Schleifendurchgängen die Summe von Exponentialfunktionen berechnet und dient damit gewissermaßen als Hardware-Beschleuniger bei der Erledigung von komplexen Aufgaben des Mikrocontrollers bzw. Berechnungen des Prozessorkerns 41. Die Logikschaltung 44 liegt dabei als gesonderte Hardwarekomponente außerhalb des Prozessors vor.

Es sind viele Umsetzungen der Berechnung von Exponentialfunktionen in Hardwareschaltungen bekannt. Zum Beispiel kann dabei auf einen BKM-Algorithmus (Bajard, Kla, Muller), einen CORDIC-Algorithmus oder auf bekannte Reihenentwicklungen zur Annäherung von Exponentialfunktionen zurückgegriffen werden.

Die hiermit vorgeschlagene Logikschaltung des Mikrocontrollers kann Berechnungen des Mikrocontroller durch die Bereitstellung berechneter Exponentialfunktionen unterstützen und damit schnellere, günstigere (Kosten und Flächenbedarf), energieeffizientere und zuverlässigere Berechnungen von Aufgaben des Mikrocontrollers ermöglichen, für welche die Berechnung von Exponentialfunktionen eine Teilaufgabe darstellt. Durch die Möglichkeit einer Konfiguration der Logikschaltung kann eine besonders flexible aber weiterhin effiziente Berechnungsunterstützung erreicht werden.

Da die Logikschaltung als gesonderte Hardwarekomponente außerhalb des Prozessors vorliegt, gibt es keine direkten Abhängigkeiten zu dem Prozessor. Dadurch werden wechselseitige Einflüsse auf die Ausführungsgeschwindigkeit der weiteren Prozessorfunktionen vermieden. Die Ausführung der Software wird nicht direkt beeinflusst. Trotz der eingeschränkten Funktionalität kann die implementierte Funktionalität dennoch möglichst flexibel eingesetzt werden und wird dazu von einem Software-Prozessor gesteuert.

Besonders flexibel kann die Logikschaltung in dem Mikrocontroller eingesetzt werden, wenn sie konfigurierbar ist, zum Beispiel zum Zweck ihrer Konfiguration Konfigurationsdaten aus einem Konfigurationsdatenspeicher lesen kann. Solche Konfigurationsdaten können Trainingsdaten oder Hyperparameter sein oder sich auch darauf beziehen, wie die Exponentialfunktion oder die Summen berechnet werden sollen. Auch kann festgelegt werden, dass die Logikschaltung Exponentialfunktionen von Summen variabler Länge und Summanden berechnet. Weiterhin kann auch die Summation verschiedener Exponentialfunktionen konfiguriert werden, wobei für jede der auszusummierenden Exponentialfunktionen die Parameter sowie die Anzahl der aufzusummierenden Exponentialfunktionen konfigurierbar sein können. Darüber hinaus kann die Konfiguration auch die Art der Berechnung der Exponentialfunktion betreffen, zum Beispiel falls durch die Logikschaltung verschiedene Berechnungswege möglich sind oder falls innerhalb der Logikschaltung zum Beispiel eine Parallelisierung von Berechnungen möglich ist.

Die Konfigurationsdaten können zweckmäßigerweise durch den Prozessor bzw. durch eine weitere Recheneinheit des Mikrocontrollers, vorzugsweise abhängig von zu berechnenden Aufgabe oder bestimmten Fahrzeuginformationen, generiert und in einen Konfigurationsdatenspeicher geschrieben werden, auf den die Logikschaltung Zugriff hat. Damit ist die Logikschaltung flexibel auf die zu berechnenden Aufgaben, aber auch auf weitere Bedingungen anpassbar.

Zur effizienten Umsetzung der Konfiguration kann die Logikschaltung über einen angeschlossenen (lokalen) Speicher verfügen, in welchem die Konfigurationsdaten gespeichert sind.

Soll der Einsatz eines lokalen Speichers eingespart werden, kann es auch vorteilhaft sein, die Konfigurationsdaten in einem globalen Speicher abzulegen, auf welchen die Logikschaltung zum Beispiel einen direkten Speicherzugriff (DMA) haben kann, um auch in dieser Lösung eine schnelle und zuverlässige Konfiguration zu ermöglichen.

In Figur 5 sind schematisch die Schritte eines Verfahrens zur Ermittlung von Ausgangsgrößen durch ein Steuergerät im Fahrbetrieb durch Bayes'sche Regression von vor dem Fahrbetrieb bestimmten Trainingsdaten gezeigt.

Im ersten Schritt 51 werden Trainingswerte für Eingangsgrößen und Ausgangsgrößen vor dem Betrieb (auch als offline bezeichnet), also zum Beispiel im Werk des Steuergeräteherstellers oder des Fahrzeugherstellers, in einer Applikationsphase durch Messungen bestimmt und für einen Zugriff durch das Steuergerät gespeichert. Die so bestimmten Werte sind zum Teil Werte, welche im Betrieb des Fahrzeugs (online) von Sensoren an das Steuergerät übermittelt werden, bzw. allgemeine Werte, die von dem Steuergerät bestimmt werden können, z.B. indirekt durch Berechnungen aufgrund von Sensorinformationen. Dies sind im Online-Betrieb die Eingangswerte des Modells. Zum anderen Teil sind es Werte, welche im Online-Betrieb des Steuergeräts bzw. des Fahrzeugs nicht direkt für das Steuergerät bestimmbar sind. Solche Werte können allerdings für die Steuerung bestimmter Funktionen des Fahrzeugs durch das Steuergerät benötigt werden. Dies sind im Online-Betrieb die Ausgangswerte des Modells.

Die Trennungslinie 500 trennt für das dargestellte Verfahren den Offline-Verfahrensschritt 51 von den Online-Verfahrensschritten 52-54 ab.

Im zweiten Verfahrensschritt 52 empfängt das Steuergerät Eingangsgrößen, z.B. von Sensoren.

Im dritten Verfahrensschritt 53 führt das Steuergerät auf Basis der empfangenen und möglicherweise weiterer gespeicherter oder rechnerisch ermittelter Eingangsgrößen eine Bayes'sche Regression basierend auf den vorher offline bestimmten Trainingswerten durch und ermittelt damit mindestens eine Ausgangsgröße und gegebenenfalls eine Varianz der Ausgangsgröße, aus welcher eine Aussage über die Genauigkeit der Ausgangsgrößen-Bestimmung abgeleitet werden kann. Innerhalb des Steuergeräts kann die Bayes'sche Regression dabei beispielsweise durch eine oder mehrere Recheneinheiten des Steuergeräts in Software durchgeführt werden, Teilaufgaben der Berechnung, darunter die Berechnung von Exponentialfunktionen, werden aber auch an eine darauf optimierte Hardwareeinheit, insbesondere Logikschaltung, ausgelagert. Im vierten Verfahrensschritt 54 verwendet das Steuergerät die bestimmte Ausgangsgröße und gegebenenfalls deren Varianz zur Steuerung oder Regelung einer Funktion im Fahrzeug, beispielweise durch eine Ausgabe eines Steuer- oder Regelsignals an einen Aktor.

Im Betrieb des Fahrzeug wird das Verfahren gewöhnlich immer wieder hintereinander durchgeführt, insbesondere auch für verschiedene Ausgangsgrößen und auf Basis verschiedener Eingangsgrößen. Verschiedene solcher Verfahren können auch ganz oder teilweise parallel durchgeführt werden.

## Patentansprüche

1. Steuergerät (1) in einem Fahrzeug, welches Mittel aufweist, während eines Betriebs des Fahrzeugs auf Basis von mindestens einer während des Betriebs ermittelten Eingangsgröße mindestens eine Ausgangsgröße für eine Steuerung von Funktionen des Fahrzeugs zu berechnen, wobei das Steuergerät (1) Mittel aufweist, die Berechnung der Ausgangsgröße unter Verwendung einer Bayes'schen Regression über vor dem Betrieb für die Ausgangsgröße und die Eingangsgröße ermittelte Trainingswerte durchzuführen, **dadurch gekennzeichnet, dass** es eine Recheneinheit (10) aufweist, welche teilweise die Bayes'sche Regression durchführt, und eine der Recheneinheit (10) des Steuergeräts (1) zugeordnete Hardwareeinheit, insbesondere Logikschaltung (14), aufweist,
welche Berechnungen von Exponentialfunktionen zur Durchführung der Bayes'schen Regression durchführt.

2. Steuergerät (1) nach Anspruch 1, **dadurch gekennzeichnet, dass** die der Recheneinheit (10) des Steuergeräts (1) zugeordnete Hardwareeinheit Mittel aufweist, eine Summe aus Exponentialfunktionen zu berechnen.

3. Steuergerät (1) nach Anspruch 1, **dadurch gekennzeichnet, dass** es Mittel aufweist, die Bayes'sche Regression als Kriging, Gauß-Prozess oder Sparse-Gauß-Prozess zu realisieren.

4. Steuergerät (1) nach einem der vorangegangenen Ansprüche, **dadurch gekennzeichnet, dass** es Mittel aufweist, für die Steuerung auch eine aus der Bayes'schen Regression ermittelte Varianz der Ausgangsgröße zu berücksichtigten.

5. Steuergerät (1) nach Anspruch 4, **dadurch gekennzeichnet, dass** es Mittel aufweist, Maßnahmen zu ergreifen, falls die ermittelte Varianz einen Schwellwert überschreitet.

6. Steuergerät (1) nach einem der vorangegangenen Ansprüche, **dadurch gekennzeichnet, dass** es Mittel aufweist, für die Berechnung mindestens einer Ausgangsgröße eine durch Autoregression dynamisch modellierte Bayes'sche Regression über die vor dem Betrieb ermittelten Trainingswerte durchzuführen.

7. Verfahren zur Berechnung von mindestens einer Ausgangsgröße für eine Steuerung von Funktionen eines Fahrzeugs durch ein Steuergerät (1) in dem Fahrzeug während eines Betriebs des Fahrzeugs auf Basis von mindestens einer während des Betriebs ermittelten Eingangsgröße, **dadurch gekennzeichnet, dass** vor dem Betrieb Trainingswerte für die Ausgangsgröße und die Eingangsgröße ermittelt werden und dass die Berechnung der Ausgangsgröße unter Verwendung einer Bayes'schen Regression über die Trainingswerte durchgeführt wird, **dadurch gekennzeichnet, dass**
in dem Steuergerät (1) die Berechnung der Bayes'schen Regression teilweise durch eine Recheneinheit des Steuergeräts durchgeführt wird und
dass Berechnungen von Exponentialfunktionen zur Durchführung der Bayes'schen Regression durch eine der Recheneinheit (10) des Steuergeräts (1) zugeordnete Hardwareeinheit, insbesondere Logikschaltung (14), durchgeführt werden.

8. Verfahren nach Anspruch 7, **dadurch gekennzeichnet, dass** für die Steuerung auch eine aus der Bayes'schen Regression ermittelte Varianz der Ausgangsgröße berücksichtigt wird.

9. Verfahren nach einem der Ansprüche 7 und 8, **dadurch gekennzeichnet, dass** für die Berechnung mindestens einer Ausgangsgröße eine durch Autoregression dynamisch modellierte Bayes'schen Regression über die vor dem Betrieb ermittelten Trainingswerte durchgeführt wird.

10. Verfahren nach einem der Ansprüche 7 bis 9, **dadurch gekennzeichnet, dass** die Bayes'sche Regression als Kriging, Gauß Prozess oder Sparse-Gauß-Prozess realisiert wird.

**Claims**

1. Controller (1) in a vehicle, which has means for, during operation of the vehicle, taking at least one input variable ascertained during the operation as a basis for calculating at least one output variable for controlling functions of the vehicle, wherein the controller (1) has means for performing the calculation of the output variable by using a Bayesian regression for training values ascertained for the output variable and the input variable before the operation, **characterized in that** it has a computing unit (10) that performs some of the Bayesian regression, and
has a hardware unit, in particular a logic circuit (14), associated with the computing unit (10) of the controller (1), that performs calculations of exponential functions for performing the Bayesian regression.

2. Controller (1) according to Claim 1, **characterized in that** the hardware unit associated with the computing unit (10) of the controller (1) has means for calculating a sum of exponential functions.

3. Controller (1) according to Claim 1, **characterized in that** it has means for implementing the Bayesian regression as kriging, a Gaussian process or a sparse Gaussian process.

**4.** Controller (1) according to one of the preceding claims, **characterized in that** it has means for also taking into consideration for the control a variance, ascertained from the Bayesian regression, in the output variable.

**5.** Controller (1) according to Claim 4, **characterized in that** it has means for taking measures if the ascertained variance exceeds a threshold value.

**6.** Controller (1) according to one of the preceding claims, **characterized in that** it has means for performing for the calculation of at least one output variable a Bayesian regression, dynamically modelled by means of autoregression, for the training values ascertained before the operation.

**7.** Method for calculating at least one output variable for controlling functions of a vehicle by means of a controller (1) in the vehicle during operation of the vehicle on the basis of at least one input variable ascertained during the operation, **characterized in that** training values are ascertained for the output variable and the input variable before the operation and **in that** the calculation of the output variable is performed by using a Bayesian regression for the training values, **characterized in that**
some of the calculation of the Bayesian regression is performed in the controller (1) by a computing unit of the controller and
**in that** calculations of exponential functions for performing the Bayesian regression are performed by a hardware unit, in particular a logic circuit (14), associated with the computing unit (10) of the controller (1).

**8.** Method according to Claim 7, **characterized in that** a variance, ascertained from the Bayesian regression, in the output variable is also taken into consideration for the control.

**9.** Method according to either of Claims 7 and 8, **characterized in that** a Bayesian regression, dynamically modelled by means of autoregression, for the training values ascertained before the operation is performed for the calculation of at least one output variable.

**10.** Method according to one of Claims 7 to 9, **characterized in that** the Bayesian regression is implemented as kriging, a Gaussian process or a sparse Gaussian process.

## Revendications

**1.** Contrôleur (1) dans un véhicule, lequel possède des moyens pour calculer, pendant un fonctionnement du véhicule et sur la base d'au moins une grandeur d'entrée déterminée pendant le fonctionnement du véhicule, au moins une grandeur de sortie pour une commande de fonctions du véhicule, le contrôleur (1) possédant des moyens qui réalisent le calcul de la grandeur de sortie en utilisant une régression bayésienne sur des valeurs d'apprentissage déterminées avant le fonctionnement pour la grandeur de sortie et la grandeur d'entrée, **caractérisé en ce qu'**il possède une unité de calcul (10) qui réalise en partie la régression bayésienne et possède une unité matérielle, notamment un circuit logique (14), associée à l'unité de calcul (10) du contrôleur (1), laquelle réalise des calculs de fonctions exponentielles en vue de réaliser la régression bayésienne.

**2.** Contrôleur (1) selon la revendication 1, **caractérisé en ce que** l'unité matérielle associée à l'unité de calcul (10) du contrôleur (1) possède des moyens pour calculer une somme des fonctions exponentielles.

**3.** Contrôleur (1) selon la revendication 1, **caractérisé en ce qu'**il possède des moyens pour réaliser la régression bayésienne sous la forme d'un krigeage, d'un processus gaussien ou d'un processus gaussien clairsemé.

**4.** Contrôleur (1) selon l'une des revendications précédentes, **caractérisé en ce qu'**il possède des moyens pour tenir également compte, pour la commande, d'une variance de la grandeur de sortie déterminée à partir de la régression bayésienne.

**5.** Contrôleur (1) selon la revendication 4, **caractérisé en ce qu'**il possède des moyens pour prendre des mesures dans le cas où la variance déterminée dépasse une valeur de seuil.

**6.** Contrôleur (1) selon l'une des revendications précédentes, **caractérisé en ce qu'**il possède des moyens pour réaliser, pour le calcul d'au moins une grandeur de sortie, une régression bayésienne modélisée dynamiquement par autorégression sur les valeurs d'apprentissage déterminées avant le fonctionnement.

**7.** Procédé de calcul d'au moins une grandeur de sortie pour une commande de fonctions d'un véhicule par un contrôleur (1) dans le véhicule pendant un fonctionnement du véhicule sur la base d'au moins une grandeur d'entrée déterminée pendant le fonctionnement, caractérisé en ce des valeurs d'apprentissage sont déterminées avant le fonctionnement pour la grandeur de sortie et la grandeur d'entrée et en ce que le calcul de la grandeur de sortie est réalisé en utilisant une régression bayésienne sur les valeurs d'apprentissage, **caractérisé en ce que**
dans le contrôleur (1), le calcul de la régression bayésienne est réalisé en partie par une unité de calcul du contrôleur et **en ce que** des calculs de fonctions exponentielles en vue de réaliser la régression bayésienne sont réalisés par une unité matérielle, notamment un circuit logique (14), associé à l'unité de calcul (10) du contrôleur (1).

**8.** Procédé selon la revendication 7, **caractérisé en ce qu'**une variance de la grandeur de sortie déterminée à partir de la régression bayésienne est également prise en compte pour la commande.

**9.** Procédé selon l'une des revendications 7 et 8, **caractérisé en ce que** pour le calcul d'au moins une grandeur de sortie, une régression bayésienne modélisée dynamiquement par autorégression est réalisée sur les valeurs d'apprentissage déterminées avant le fonctionnement.

**10.** Procédé selon l'une des revendications 7 à 9, **caractérisé en ce que** la régression bayésienne est réalisée sous la forme d'un krigeage, d'un processus gaussien ou d'un processus gaussien clairsemé.

Figur 1

Figur 2a

211 →
212 →
213 →
214 →

21

215 →

216

Figur 2b

301 →
302 →
303 →
304 →
305 →

30

306

300

307 →

Figur 3a

311 →
312 →
313 →
314 →
315 →

31

318

316

310

317

320

327

330

337 →

Figur 3b

Figur 4

Figur 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19963213 A1
- DE 102008004362 A1
- DE 102007008514
- DE 102008001081 A1
- DE 112005003527 T5
- DE 102008043315 A1

**In der Beschreibung aufgeführte Nicht-Patentliteratur**

- **WARD, M. C. ; BRACE, C. J. ; VAUGHAN, N. D. ; SHADDICK, G. ; CEEN, R. ; HALE, T. ; KENNEDY, G.** International Conference on Statistics and Analytical Methods in Automotive Engineering. *IMechE Conference Transactions,* 2002, 3-15
- **D. LOWE ; K. ZAPART.** Validation of Neural Networks in Automotive Engine Calibration. *Proceedings Conference on Artificial Neural Networks,* 1997
- **C. CORTES ; V. VAPNIK.** Support-Vector Networks. *Machine Learning,* vol. 20, 1995
- **WITWATERSRAND, D.G. KRIGE.** *A statistical approach to some mine valuations and allied problems,* 1951
- **G. MATHERON.** The intrinsic random functions, and their applications. *Adv. Appl. Prob.,* 1973, vol. 5, 439-468
- **C. E. RASMUSSEN.** *Evaluation of Gaussian Processes and other Methods for Non-linear Regression,* 1996
- **E. SNELSON ; Z GHAHRAMANI.** Sparse Gaussian processes using pseudo-inputs. *Advances in Neural Information Processing Systems,* 2006, vol. 18, 1259-1266
- **C. E. RASMUSEN ; C. WILLIAMS.** Gaussian Processes for Machine Learning. MIT Press, 2006
- **E. SNELSON ; Z. GHAHRAMANI.** Sparse Gaussian processes using pseudo-inputs. *Advances in Neural Information Processing Systems,* 2006, vol. 18, 1259-1266
- **Y. SHEN, A. NG ; M. SEEGER.** Fast gaussian process regression using kd-trees. *Advances in Neural Information Processing Systems,* 2006, vol. 18, 1227-1234
- **A. GIRARD ; C.E. RASMUSSEN ; R. MURRAY-SMITH.** Multiple-step ahead prediction for non linear dynamic systems - A Gaussian Process treatment with propagation of the uncertainty. *Advances in Neural Information Processing Systems,* 2003, vol. 15
- **K. AZMAN ; J. KOCIJAN.** Comprising Prior Knowledge in Dynamic Gaussian Process Models. *International Conference on Computer Systems and technologies - CompSysTech,* 2005
- **G. GREGORCIC ; G. LIGHTBODY.** Gaussian process approach for modelling of nonlinear systems. *Engineering Applications of Artification Intelligence,* 2009, vol. 22, 522-533